Europäisches Patentamt

European Patent Office

Office européen des brevets

(19)

(11) EP 1 380 870 A1

(12) **EUROPEAN PATENT APPLICATION**

(43) Date of publication:
14.01.2004 Bulletin 2004/03

(51) Int Cl.$^7$: **G02B 7/02**, B23K 26/00

(21) Application number: 02447134.4

(22) Date of filing: 12.07.2002

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(71) Applicant: **VDM Laser Optics**
**9810 Eke-Nazareth (BE)**

(72) Inventors:
• **Muys, Peter Frans Maria**
**B-9030 Gent (BE)**
• **Vandamme, Eefje**
**B-8000 Brugge (BE)**

(74) Representative: **Brants, Johan Philippe Emile**
**De Clercq, Brants & Partners cv**
**Edgard Gevaertdreef 10a**
**9830 Sint-Martens-Latem (BE)**

(54) **Lens with optimized heat transfer properties**

(57) The present invention relates to lens for laser cutting devices, with improved heat transfer properties and more particularly to lens having a radius $R_1 + R_2$ consisting of a lens body having a radius $R_1$ and a radial outwardly extending flat flange portion having a radius $R_2$, whereby the ratio of $R_1/R_2$ is chosen such that the heat transfer is optimized.

Fig. 1

## Description

### Field of the invention

The present invention relates to lens for laser cutting devices and more particularly to lens with improved heat transfer properties.

### Background

Lenses suitable for laser processing devices may be used for a variety of laser material processing applications, including cutting, welding, heat treating, scribing and selective removal in a broad range of metals, plastics and composites and also for high-precision material processing application, such as ceramic scribing and machining, ultra fine metal cutting, high accuracy material removal and low loss paper and plastic cutting.

Modern day applications of laser devices call for increasingly powerful and precise beams. During processing of the material, significant heating in a lens can occur, leading to the destruction of the lens due to thermal stresses beyond the fracture limit of the lens. For example high mechanical tension on the lens edge exerted by lens mounts and retainer rings lead also to heating up of the lens. The excessive heating of the lens can lead directly to poor efficiency and reduction of focusing capability of the output power. Additionally, excessive heating of the lens can cause optical distortion of the laser emission due to thermal and stress-induced birefringence.

Due to the adverse effects of high temperatures, it is important to effectively transfer the generated heat away from the interior of the lens. Prior configurations provide such heat transfer by mounting the lens on a thermally conductive heat sink, such as copper. Lens mounting assemblies preventing mechanical stresses are known. US Patent No. 4,723,833 discloses a lens retaining assembly including a frame to retain the lens provided with elastically retaining means to allow free thermal expansion or contraction of the lens. US Pat. No. 5,510,935 relates to lens mounting systems comprising a lens mount, an annular mounting shoulder a mounting ring and a lens comprising an optical surface and an annular mounting member at the interface of said optical surface.

However, regardless of the mounting assemblies used or of the heat sink employed, the lens temperature can still be unacceptably high due to poor thermal conductivity of the lens.

It is a main object of the present invention to provide a lens with optimized heat transfer properties. It is another object of the present invention to provide a lens with optimized heat transfer properties providing thereby a better thermal contact when mounted in a holder. It is yet another object of the present invention to provide a lens with optimized heat transfer properties wherein the thermal lensing effects caused by the temperature are reduced. It is a further object of the present invention to provide a method for optimizing heat transfer in a lens, using a lens with optimized heat transfer properties.

### Summary of the invention

The present invention relates to lenses having a radius $R_1 + R_2$ consisting of a lens body having a radius $R_1$ and a radial outwardly extending flat flange portion having a radius $R_2$, whereby the ratio of $R_1/R_2$ is chosen such that the heat transfer is optimized.

The lens with optimized heat transfer properties described herein has a surprisingly reduced operating temperature during laser material processing applications and allows a higher laser power to pass through. The optimized heat transfer properties of said lens advantageously reduces the thermal lensing effects caused by the temperature dependent index of refraction thereby reducing the distortion of the laser beam during laser operation. Furthermore, the thermal expansion of the lens with optimized heat transfer properties is surprisingly reduced and provides a better focusing during laser operation by reducing unwanted movement of the focal distance of the lenses.

The present invention will be further disclosed in detail hereunder wherein a preferred embodiment of the device of the present invention is disclosed in details. The description is only given by way of example and does not limit the invention. The reference numbers relate to the hereto-annexed figures.

### Brief description of the figures

Figure 1 represents a cross sectional view of a preferred embodiment of a lens according to the invention mounted in a lens holder.

Figure 2 represents a cross-sectional view of another preferred embodiment of a lens according to the invention mounted in a lens holder.

Figure 3 represents a simplified cross-sectional view of an electronic component mounted on a heat sink.

Figure 4 represents a simplified cross-sectional view of a lens mounted in a lens holder.

Figure 5 represents a simplified thermal circuit of the assembly of figure 3 or figure 4.

**Detailed description**

In order to optimize the heat transfer properties of a lens having a radius $R_1 + R_2$, said lens is provided with a radial outwardly extending flat flange portion having a radius $R_2$, and has a ration $R_1/R_2$ preferably ranging from 10 to 1, wherein $R_1$ is the radius of the lens body. In another embodiment, said ratio is ranging from 5 to 1. In yet another embodiment said ratio is ranging from 3 to 1. The lenses as described above provide minimum spot size and high reliability, while having surprisingly reduced operating temperature during laser material processing applications. The localized thermal expansion of the lens' surfaces is reduced, thereby preventing the distortion of the laser beam during laser operation.

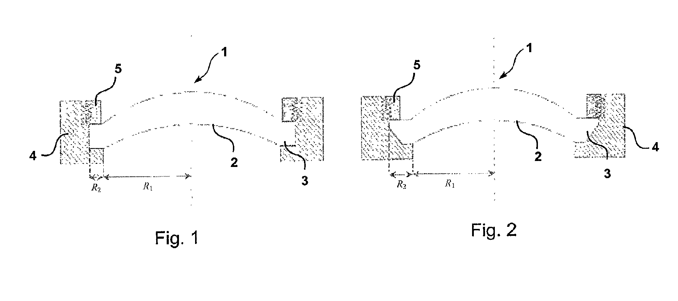

In a first embodiment as shown figure 1, the lens 1 is provided with a lens body 2 an a radial outwardly extending flat flange portion 3 and is shown mounted in a lens holder or mount comprising a lens-matched compression ring 4 and a threaded retaining ring 5. In this embodiment, the lens 1 is provided with a cylindrically shaped flange 3.

In a second embodiment illustrated in figure 2, the lens 1 has a flange 3 provided with an additional conic surface. This surface allows the enlargement of the contact area between the lens and the lens holder.

The flanges of the lenses according to the invention allow the optimum transfer of the heat to the lens holder, and permit the automatic centering of the lens in said lens holder.

The lenses according to the invention can be of any shape suitable for use in laser material processing applications having precision focusing and low absorption properties. In a preferred embodiment said lens can be a planoconvex shaped lens i.e. with one curved and one flat surface, or bi-convex shaped lenses or a positive meniscus shape lenses i.e. with two surfaces curved in the same orientation. The lenses of these shapes permit to achieve the smallest focal spot sizes and to produce the minimum heat affected zone in the laser-processed material. In another embodiment of the present invention said lens may have an aspheric surface on it, thereby increasing the focusing properties of said lens.

A high power lens can be made out of a material combining high thermal conductivity with a low absorption. Examples of materials in this category are zinc selenide, gallium arsenide and germanium. The material should not show thermal runaway at moderate temperatures. This is the phenomenon of a sudden increase of absorption due to thermally generated free carriers excited to the conduction band. Suitable materials have this transition at temperatures higher than 100°C. In an embodiment of the present invention, the lenses can be made of zinc selenide, gallium arsenide, cadmium telluride and zinc sulfide. In a preferred embodiment, the lenses according to the invention are preferably made of zinc selenide or gallium arsenide. In a more preferred embodiment, the lenses are made of zinc selenide.

In order to improve the transmission and reflection characteristics of the lenses according to the invention, said lenses may be coated with one or more thin layer of suitable material. Examples of suitable material for coating said lenses include but are not limited to zinc selenide, zinc sulfide, thorium fluoride, germanium and barium fluoride and combination thereof. In a preferred embodiment, the lenses according to the invention are coated with thorium fluoride and zinc selenide, or barium fluoride and zinc selenide. The coating of the lenses permit to have lenses with the lowest possible heat absorption, while maintaining the other characteristics of said lens such as its refractivity and focusing properties. Lower absorption in the lenses reduces the problems caused by thermal lensing as the high power laser beam passes through the lenses during laser material processing applications.

The present invention also relates to lenses provided in a lens mounting assembly. Standard lens mounts can be used. The lens mounts or holders suitable herein are preferably made from high strength, high conductivity aluminum and black anodized. The lens mount assembly may include a lens-matched compression ring and a threaded retaining ring. In order to assure optimum thermal conductivity for maximum lens life, indium-coated C-rings are preferably used for maximum heat transfer. The lens mount assembly may also include heat sink and cooling devices.

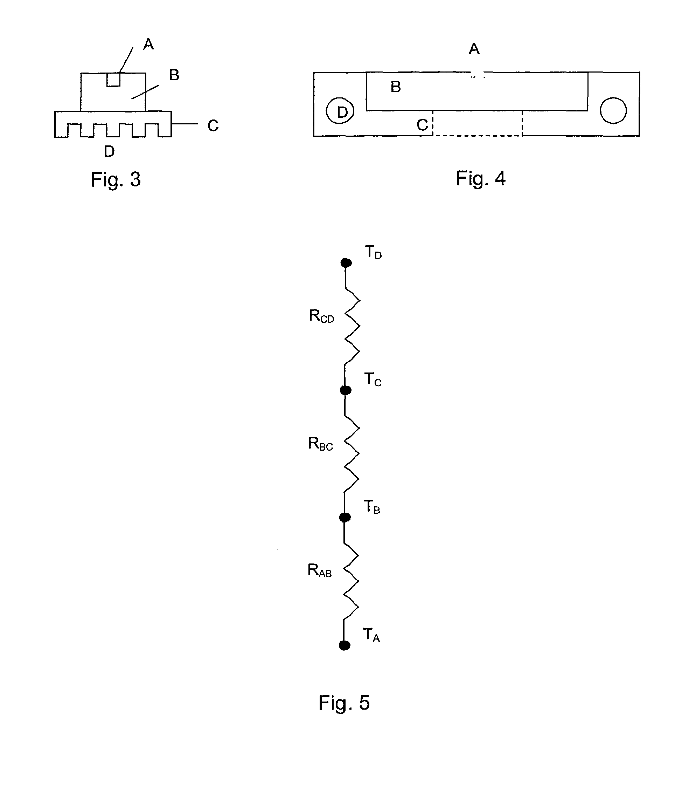

The lens cooling problem can be approached using the methodology of heat sinking electronic components on printed circuit boards. For example, an analogy can be made between the heat transfer in an electronic component mounted on a heat sink and a hot cutting lens mounted in a holder. Figure 3 represents a simplified cross sectional view of an electronic component mounted on a heat sink wherein A represents the junction of the component, B the case, C the heat sink and D the ambient air. The case is connected to a finned heat sink that can be cooled by the air stream. In this simplified model, heat flows serially from the junction to the case then across the interface into the heat sink, and finally dissipated from the heat sink to the air stream. Figure 4 illustrates a cross sectional view of a lens mounted in a lens holder, wherein A represents the hottest point of the lens, B the lens edge, C the support ring and D the cooling water. The lens is resting on its holder, which is conductively cooled by water flowing through the inside of the holder.

Using the concept of thermal resistance, a simplified thermal circuit of these two assemblies can be drawn (Figure 5). The electronic component and the lens are characterized by four temperatures $T_A$, $T_B$, $T_C$, $T_D$ as shown in Table 1. The cooling performance can be determined by three thermal resistances $R_{AB}$, $R_{BC}$ and $R_{CD}$. The overall resistance R is equal to $R = R_{AB} + R_{BC} + R_{CD}$ wherein:

$R_{AB}$: internal thermal resistance of the lens

$R_{BC}$: interface resistance

$R_{CD}$: thermal resistance of support ring to cooling water

Table 1:

| Temperature | IC | lens |
|---|---|---|
| **A** | Junction temperature | Center temperature |
| **B** | Case temperature | Edge temperature |
| **C** | Heat sink temperature | holder temperature |
| **D** | Ambient temperature | Water temperature |

The power Q dissipated in the lens structure is $Q = \dfrac{T_A - T_D}{R}$

$R_{AB}$ and $R_{CD}$ are mainly material determined, whereas the interface resistance $R_{BC}$ is much harder to assess since it depends in a complex way on surface roughness, mounting pressure, etc...

Traditional $CO_2$ laser cutting lenses can be made almost exclusively from zinc selenide, and the lens holder is usually made of copper. As an industry standard, the lenses are 3.8 or 5.1 cm in diameter. Due to the large difference in thermal conductivity between ZnSe (16 W/mK) and Cu (400 W/mK), it is clear that the contact resistance $R_{BC}$ is crucial for the proper heat sinking of the lens. If the lens surface in contact with the holder is concave, this means that there is little effective contact between the lens and the holder.

A filler material such as indium can be used to fill this gap. In general, heat transfer through a contact is due to conduction across the actual contact area and/or radiation across the gaps. The contact resistance may be viewed as two parallel resistances: the first one due to the contact spots and the second one due to the gaps. In the case of a concave lens surface in contact with a flat support, the major contribution to the resistance is made by the gap. The gap resistance relative to the total contact resistance is hence directly related to the surface of the holder relative to the surface of the lens. For reasons of mechanical strength and gas pressure sealing, the support ring of the holder has a width of 2 to 3 mm, for a lens diameter of 3.8 to 5.1 cm. By providing a flange as described herein to the lens, the contact resistance can hence be lowered by a factor equal to the square of the ratio of the lens radius divided by the width of the support ring. This means in practice a factor of $(19.05/3)^2$ to $(25.4/2)^2$ or 40.32 to 161.29. The lens according to the invention therefore has flange that perfectly fits the surface of the lens holder and have optimized heat transfer properties.

The lenses according to the invention have the advantage of providing a better thermal contact when mounted in the holder, thereby reducing thermal aberrations. Moreover, the retainer ring will exert now a uniform tension on the lens, preventing in this way concentration of the forces which lower the laser induced damage threshold of the lens. The flanges moreover help in precisely aligning the mechanical axis of the lens on the optical axes of the lens surfaces. Moreover, they help in increasing the contact zone between the lens and the lens holding, thereby improving the heat transfer between the lens and the holder.

The present invention further relates to a method for optimizing heat transfer in a lens, using a lens with a radius $R_1 + R_2$, wherein said lens consists of a lens body having a radius $R_1$ and a radial outwardly extending flat flange portion having a radius $R_2$, whereby the ratio of $R_1/R_2$ is chosen such that the heat transfer is optimized.

The lenses according to the invention are particularly suitable for use in laser material processing applications, such as for example cutting, welding, heat treating, scribing, selective removal in a broad range of metals, plastics and composites, ceramic scribing and machining, ultra fine metal cutting, high accuracy material removal and low loss paper and plastic cutting. They can be used in any laser systems, such as Carbon Dioxide lasers; erbium, chromium, yttrium, scandium, gallium garnet (Er, Cr:YSGG) laser; erbium, yttrium, aluminum garnet (Er:YAG) laser, an erbium, yttrium, scandium, gallium garnet (Er:YSGG) laser; chromium, thulium, erbium, yttrium, aluminum garnet (CTE:YAG) laser, erbium, yttrium orthoaluminate (Er:YAL03) laser; argon fluoride (ArF) excimer laser; xenon chloride (XeCl) excimer laser; krypton fluoride (KrF) excimer laser; Neodymium doped Yttrium Aluminum Garnet (Nd:Yag) laser; quadrupled neodymium, yttrium, aluminum garnet (quadrupled Nd:YAG) laser; Holmium doped Yttrium Aluminum Garnet (Ho:Yag), Erbium doped Yttrium Aluminum Garnet laser, Potassium Titanyl phosphate (KTP) laser, Dye, Alexandrite, Ruby, and Diode lasers. In a preferred embodiment, said lenses are used in carbon dioxide lasers.

The lenses according to the invention are particularly suitable for optimizing heat transfer during laser material processing applications.

The present invention also relates to methods for making a lens with optimized heat transfer properties using diamond turning techniques, wherein said lens has a radius $R_1$ + $R_2$, and consists of a lens body having a radius $R_1$ and a radial outwardly extending flat flange portion having a radius $R_2$, whereby the ratio of $R_1/R_2$ is chosen such that the heat transfer is optimized.

**Claims**

1.  Lens having a radius $R_1$ + $R_2$ consisting of a lens body having a radius $R_1$ and a radial outwardly extending flat flange portion having a radius $R_2$, whereby the ratio of $R_1/R_2$ is chosen such that the heat transfer is optimized.

2.  Lens according to claim 1, wherein said $R_1/R_2$ ratio is ranging from 10 to 1.

3.  Lens according to claim 2, wherein said ratio is ranging from 5 to 1

4.  Lens according to claim 3, wherein said ratio is ranging from 3 to 1.

5.  Lens according to any of claims 1 to 4, wherein said lens is made of zinc selenide or gallium arsenide.

6.  Lens according to claim 5, wherein said lens is made of zinc selenide.

7.  Lens according to any of claims 1 to 6, wherein said lens is coated with thorium fluoride and zinc selenide, or barium fluoride and zinc selenide.

8.  Lens according to any of claims 1 to 7, wherein said lens is mounted in a lens mounting assembly.

9.  Method for optimizing heat transfer in a lens, using a lens with a radius $R_1$ + $R_2$, wherein said lens consists of a lens body having a radius $R_1$ and a radial outwardly extending flat flange portion having a radius $R_2$, whereby the ratio of $R_1/R_2$ is chosen such that the heat transfer is optimized.

10. Use of a lens according to any of claims 1 to 8, in laser material processing applications.

11. Use of a lens according to any of claims 1 to 8, for optimizing heat transfer during laser material processing applications.

12. Method for making a lens with optimized heat transfer properties using diamond turning techniques, wherein said lens has a radius $R_1$ + $R_2$, and consists of a lens body having a radius $R_1$ and a radial outwardly extending flat flange portion having a radius $R_2$, whereby the ratio of $R_1/R_2$ is chosen such that the heat transfer is optimized.

Fig. 1

Fig. 2

Fig. 3

Fig. 4

Fig. 5

EP 1 380 870 A1

**European Patent Office**

## EUROPEAN SEARCH REPORT

Application Number

EP 02 44 7134

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X<br><br>A | EP 0 423 691 A (FUJI PHOTO FILM CO LTD) 24 April 1991 (1991-04-24)<br>* column 5, line 45 - line 58 *<br>* column 6, line 1 - line 8 *<br>* column 7, line 9 - line 21 *<br>* figures 1-6 * | 1-4,8,9<br><br>12 | G02B7/02<br>B23K26/00 |
| X<br><br>A | "MELLES GRIOT CATALOGUE, PAGES 16-1 - 16-6"<br>1995 , USA XP002220903<br>* page 16-6 * | 1,5,6,<br>9-11<br><br>7,8,12 | |
| X | US 5 384 659 A (SHIKAMA SHINSUKE ET AL) 24 January 1995 (1995-01-24)<br>* figure 4; table 1 * | 1,2,9,12 | |
| A | US 3 757 078 A (BERRY S ET AL) 4 September 1973 (1973-09-04)<br>* abstract; figures * | 1-12 | |
| D,A | US 5 510 935 A (WHITTY JAMES ET AL) 23 April 1996 (1996-04-23)<br>* abstract; figures * | 1-12 | TECHNICAL FIELDS SEARCHED (Int.Cl.7)<br><br>G02B<br>B23K |
| D,A | US 4 723 833 A (YAMADA NOBORU) 9 February 1988 (1988-02-09)<br>* abstract; figures * | 1-12 | |
| A | US 6 270 222 B1 (HERPST ROBERT D) 7 August 2001 (2001-08-07)<br>* abstract; figures * | 1-12 | |

The present search report has been drawn up for all claims

| Place of search | Date of completion of the search | Examiner |
|---|---|---|
| THE HAGUE | 14 November 2002 | Ward, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 02 44 7134

This annex lists the patent family members relating to the patent documents cited in the above-mentioned European search report.
The members are as contained in the European Patent Office EDP file on
The European Patent Office is in no way liable for these particulars which are merely given for the purpose of information.

14-11-2002

| Patent document cited in search report | | Publication date | Patent family member(s) | | Publication date |
|---|---|---|---|---|---|
| EP 0423691 | A | 24-04-1991 | JP | 2885440 B2 | 26-04-1999 |
| | | | JP | 3130726 A | 04-06-1991 |
| | | | JP | 3200946 A | 02-09-1991 |
| | | | DE | 69019915 D1 | 13-07-1995 |
| | | | DE | 69019915 T2 | 12-10-1995 |
| | | | EP | 0423691 A2 | 24-04-1991 |
| | | | US | 5047792 A | 10-09-1991 |
| US 5384659 | A | 24-01-1995 | JP | 2769768 B2 | 25-06-1998 |
| | | | JP | 6214155 A | 05-08-1994 |
| | | | US | 5613749 A | 25-03-1997 |
| | | | US | 5572362 A | 05-11-1996 |
| | | | US | 5662400 A | 02-09-1997 |
| US 3757078 | A | 04-09-1973 | NONE | | |
| US 5510935 | A | 23-04-1996 | NONE | | |
| US 4723833 | A | 09-02-1988 | JP | 1782835 C | 31-08-1993 |
| | | | JP | 4069885 B | 09-11-1992 |
| | | | JP | 61032017 A | 14-02-1986 |
| | | | JP | 1633623 C | 20-01-1992 |
| | | | JP | 2056642 B | 30-11-1990 |
| | | | JP | 61046918 A | 07-03-1986 |
| | | | JP | 1866030 C | 26-08-1994 |
| | | | JP | 5070802 B | 05-10-1993 |
| | | | JP | 61149911 A | 08-07-1986 |
| | | | DE | 3525813 A1 | 27-02-1986 |
| US 6270222 | B1 | 07-08-2001 | US | 5898522 A | 27-04-1999 |
| | | | AU | 7390796 A | 28-04-1997 |
| | | | WO | 9713172 A1 | 10-04-1997 |

EPO FORM P0459

For more details about this annex : see Official Journal of the European Patent Office, No. 12/82